# EUROPÄISCHE PATENTSCHRIFT

(11) **EP 3 129 805 B1**
(45) Veröffentlichungstag und Bekanntmachung des Hinweises auf die Patenterteilung: **14.08.2024**
(21) Anmeldenummer: 15716769.3
(22) Anmeldetag: 10.04.2015
(51) Int. Cl.: G01S 17/89, G01S 7/497, G01S 7/481, G01S 17/42, G01S 17/02, G01S 17/86, G01J 5/08, G01J 5/02, G01J 5/48, G01J 5/04, G01J 5/07

(54) **LASERSCANNER UND VERFAHREN**
LASER SCANNER AND METHOD
SCANNEUR LASER ET PROCÉDÉ

(30) Priorität: 10.04.2014 DE 102014105113; 07.07.2014 DE 102014109432
(43) Veröffentlichungstag der Anmeldung: 15.02.2017
(73) Patentinhaber: Zoller & Fröhlich GmbH, 88239 Wangen im Allgäu (DE)
(72) Erfinder: HÄRTL, Franz, 88339 Bad Waldsee (DE); METTENLEITER, Markus, 88316 Isny/Allgäu (DE); MÜLLER, Patrick, 88147 Achberg (DE); WAGNER, Andreas, 88239 Wangen im Allgäu (DE)
(74) Vertreter: Winter, Brandl - Partnerschaft mbB
(86) Internationale Anmeldenummer: PCT/EP2015/057890
(87) Internationale Veröffentlichungsnummer: WO 2015/155354

(56) Entgegenhaltungen:
- WO-A1-2010/108643
- DE-A1- 102012 105 027
- DE-U1- 202006 005 643
- M CABRELLES ET AL: "INTEGRATION OF 3D LASER SCANNING, PHOTOGRAMMETRY AND THERMOGRAPHY TO RECORD ARCHITECTURAL MONUMENTS", 22ND CIPA SYMPOSIUM, OCTOBER 11-15, 2009, 11 October 2009 (2009-10-11), Kyoto, Japan, XP055195003, Retrieved from the Internet <URL:http://cipa.icomos.org/fileadmin/template/doc/KYOTO/74.pdf> [retrieved on 20150611]
- S LAGÜELA ET AL: "Thermographic 3D models as the foundation for Building Information Models", 11TH INTERNATIONAL CONFERENCE ON QUANTITATIVE INFRARED THERMOGRAPHY, 14 June 2012 (2012-06-14), Naples, Italy, XP055194912, Retrieved from the Internet <URL:http://www.ndt.net/article/qirt2012/papers/QIRT-2012-180.pdf> [retrieved on 20150610]
- LAGUELA S ET AL: "Calibration and verification of thermographic cameras for geometric measurements", INFRARED PHYSICS AND TECHNOLOGY, vol. 54, no. 2, 27 January 2011 (2011-01-27), pages 92 - 99, XP028173500, ISSN: 1350-4495, [retrieved on 20110127], DOI: 10.1016/J.INFRARED.2011.01.002

## Beschreibung

Die Erfindung betrifft einen Laserscanner gemäß dem Oberbegriff des Patentanspruchs 1 und ein Verfahren, bei dem ein derartiger Laserscanner verwendet wird.

Die DE 20 2006 005 643 U1 zeigt einen Laserscanner der einen Drehkopf aufweist, der drehbar an einem Gehäuse gehalten ist, das seinerseits um eine Drehachse drehbar ist. Dabei ist an dem Drehkopf eine Messoptik angeordnet, um einen von einem Sender abgegebenen Messstrahl auf ein Messobjekt oder einen von diesem reflektierten Strahl auf einen Empfänger zu lenken. Dabei hat dieser Laserscanner eine Einrichtung zur mittelbaren oder unmittelbaren berührungslosen Erfassung von Thermographiedaten des zu vermessenden Messobjektes und eine Einrichtung zur Zuordnung dieser Thermographiedaten zu Pixeln eines 3D-Scans.

Die WO 2010/108643 A1 stellt eine Abwandlung der DE 20 2006 005 643 U1 dar, wobei an Stelle der Thermographiedaten Farbbilder einer Farbkamera mit einer 3D-Punktewolke überlagert werden.

Aus dem Beitrag "INTEGRATION OF 3D LASER SCANNING, PHOTOGRAMETRY AND THERMOGRAPHY TO RECORD ARCHITECTURAL MONUMENTS" (M Cabrelles ET AL, 22nd CIPA Symposium, October 11-15, 2009, 11. Oktober 2009, XP055195003, Kyoto, Japan) ist eine Überlagerung von 3D- mit Thermographie-Daten am Beispiel eines aus Ordovisium-Sandstein bestehenden "Djin Block No. 9" im UNESCO-Weltkulturerbe Petra (Jordanien) bekannt.

Das Paper "Thermographie 3D models as the foundation for Building Information Models" (S Lagüela ET AL, 11 th International Conference on Quantitative InfraRed Thermography, 14. Juni 2012, XP055194912, Neapel, Italien) zeigt eine Methode zur Zuordnung von Thermographiedaten zu einer 3D-Punktewolke auf Basis eines Mappings von 3D-Linien der Punktewolke mit 2D-Linien der Thermographiedaten.

Aus dem Artikel "Calibration and verification of thermographic cameras for geometric measurements" (S. Lagüela ET AL, INFRARED PHYSICS AND TECHNOLOGY, Bd. 54, Nr. 2, 27. Januar 2011, Seiten 92-99, XP028173500, ISSN: 1350-4495, DOI: 10.1016/J.INFRARED.2011.01.002) ist eine Methode zur geometrischen Kalibrierung einer 2D-Thermographiekamera zusammen mit einer metrischen 2D-Kamera bekannt.

Aus der DE 10 2012 105 027 A1 ist ein Laserscanner bekannt, bei dem an einem rotierenden Drehkopf eine Kamera angeordnet ist, über die Farbinformationen eines zu vermessenden Messobjektes aufgenommen werden können. Diese Kamera dreht mit einer Optik mit, über die ein von einem Sender abgegebener Messstrahl auf das Messobjekt gerichtet werden kann. Diese Kamera ist als Farbkamera ausgeführt, so dass die bei einer Vermessung erforderlichen Farbinformationen des Messobjektes ohne nennenswerte Farbverfälschung erfasst und dem über den Laserscanner erfassten 3D-Messdaten zugeordnet werden können, so dass eine 3D-Farbabbildung ermöglicht ist.

Mit derartigen Laserscannern werden beispielsweise Gebäude, Kanäle, Innenräume, beliebige 3D-Objekte, beispielsweise Ausstellungsobjekte eines Museums etc. vermessen, so dass ein exakter 3D-Messdatensatz zur Verfügung steht.

Der Erfindung liegt die Aufgabe zugrunde, einen Laserscanner zu schaffen, mit dem während der 3D-Vermessung zusätzliche Informationen über das Messobjekt erfasst werden können, wobei diese Informationen den Pixeln der 3D-Punktewolke zugeordnet werden, so dass diese zusätzliche Information mit dem 3D-Scan verknüpft ist.

Diese Aufgabe wird durch einen Laserscanner mit den Merkmalen des Patentanspruchs 1 gelöst. Zur Erfindung gehört auch ein Verfahren, das die Erfassung von Thermographiedaten mittels eines derartigen Laserscanners ermöglicht.

Vorteilhafte Weiterbildungen des Laserscanners bzw. des Verfahrens sind Gegenstand der Unteransprüche.

Der erfindungsgemäße Laserscanner hat einen Drehkopf, der drehbar an einem Gehäuse des Laserscanners gehalten ist, das seinerseits um eine Drehachse drehbar ist. Im Drehkopf ist eine Messoptik, insbesondere eine Laseroptik angeordnet, über die ein von einem Sender abgegebener Messstrahl auf ein Messobjekt oder ein von diesem reflektierter Strahl auf einen Empfänger gelenkt wird. Sender und Empfänger sind vorzugsweise Teil des Laserscanners. Auf diese Weise kann durch Verschwenken des Laserscanners um die insbesondere vertikale Drehachse und Drehen des Drehkopfs um seine insbesondere horizontale Achse ein 3D-Scan des Messobjektes erstellt werden. Erfindungsgemäß ist der Laserscanner zusätzlich mit einer Einrichtung ausgeführt, über die Thermographiedaten des zu vermessenden Messobjektes erfassbar sind. Diese Einrichtung ist vorzugsweise eine Thermographiekamera. Diese 3D-Thermographiedaten können dann über eine geeignete Einrichtung den Messpunkten/Pixels des 3D-Scans zugeordnet werden, so dass als Ergebnis ein 3D-Scan (Punktewolke des Messobjektes) mit verknüpften Thermographiedaten vorliegt. Die genannte Einrichtung zum Zuordnen ist insbesondere Teil des Laserscanners.

In entsprechender Weise sieht das erfindungsgemäße Verfahren vor, in einem insbesondere ersten Schritt das Messobjekt mit dem Laserscanner zu scannen und so eine Punktewolke des Messobjektes (3D-Scan) zu erhalten. Zur Erfassung der Thermographiedaten wird eine Einrichtung zur Erfassung derartiger Thermographiedaten, vorzugsweise eine Thermographiekamera, an den Laserscanner, vorzugsweise an dessen Gehäuse oder an einen Träger des Laserscanners angesetzt, so dass durch schrittweises Verschwenken des Laserscanners um seine insbesondere vertikale Drehachse und durch schrittweises Verstellen der Blickrichtung der Thermographiekamera, insbesondere durch deren Drehung um ihre insbesondere horizontale Achse, ein sphärisches Rundum-Thermographiebild des Messobjektes erhalten wird. Das Ansetzen, beziehungsweise Lagern der Thermographiekamera am Träger erweist sich für eine Genauigkeit des Laserscanners gegenüber der Lagerung am Gehäuse als vorteilhaft. Diese 3D-Thermographiedaten werden dann mit den Pixeln des 3D-Scans verknüpft, um einerseits die geometrischen Daten und andererseits die Thermographiedaten in einer 3D-Darstellung zu erhalten.

Diese vom Laserscanner und von dem Verfahren bereitgestellte, thermographische 3D-Darstellung ermöglicht eine präzisere Auswertung von Thermographiedaten, als die reinen 2D-Thermographiedaten erlauben würden. Zudem wird eine Navigation innerhalb der 3D-Darstellung ermöglicht. Insbesondere können zusätzlich zur Darstellung der Temperaturverteilung, exakte geometrische Abmessungen von Temperaturbereichen bestimmt werden, d.h. in der 3D-Darstellung können exakte räumliche Messungen durchgeführt werden, die auf Basis von 2D-Thermographiedaten nur ungenau abgeschätzt werden könnten, bzw. unmöglich wären.

Als Thermographiedaten sind von der Einrichtung zur Erfassung von Thermographiedaten, insbesondere der Thermographiekamera, vorzugsweise Thermographiebilder erstellbar.

Dabei kann die Befestigung der Einrichtung zur Erfassung von Thermographiedaten, vorzugsweise der Thermographiekamera, am Laserscanner mittels einer Plattform erfolgen, über die diese Einrichtung um eine quer zur Drehachse des Gehäuses verlaufende Achse verschwenkbar ist. Mit anderen Worten gesagt, die Blickrichtung der Thermographiekamera wird in Vertikalrichtung (Vertikal zur Standfläche) variiert.

Die Verstellung des Schwenkwinkels / der Blickrichtung erfolgt schrittweise. Vorzugsweise ist eine Schrittweite einstellbar.

Erfindungsgemäß wird es bevorzugt, wenn die Einrichtung zur Erfassung von Thermographiedaten, insbesondere die Thermographiekamera und die Plattform, gemeinsam über eine Steuerung oder Steuereinheit des Laserscanners ansteuerbar und mit Energie versorgt sind.

Die Thermographiekamera ist vorzugsweise als Infrarotkamera ausgebildet.

Vor der eigentlichen Vermessung muss die Thermographiekamera oder die Einrichtung zur Erfassung von Thermographiedaten kalibriert werden, wobei erfindungsgemäß eine innere und eine externe Kalibrierung erfolgt.

Zusätzlich kann das Messergebnis verbessert werden, wenn ein Objektiv der Thermographiekamera auf die hyperfokale Distanz eingestellt wird. Dann kann ein möglichst großer Entfernungsbereich mit der Thermographiekamera abgedeckt werden. Hierzu wird vorzugsweise ein thermographisch gut sichtbares Testobjekt, beispielsweise ein spezieller "Siemensstern" verwendet, der für die Thermographiekamera sichtbar ist, so dass diese optimal fokussiert werden kann.

Die innere Kalibrierung, beispielsweise die Erfassung der radialen Verzeichnung oder die Erfassung des Bildhauptpunktes, kann mittels eines definierten Kalibrierobjektes, das thermographisch sichtbar ist, erfolgen. Dieses Kalibrierobjekt kann beispielsweise ein vorbestimmtes Muster, vorzugsweise ein schachbrettartiges Muster oder dergleichen sein, das mittels der Thermographiekamera erfassbar ist. Durch Auswertung dieses Musters lassen sich Parameter der inneren Kalibrierung, insbesondere über Standard Algorithmen, bestimmen.

Die externe Kalibrierung erfolgt beispielsweise zur Bestimmung der Lage der optischen Achse der Thermographiekamera zum 3D-Scannerzentrum. Vorzugsweise erfolgt sie zur Bestimmung der Verschiebung und / oder Verdrehung der Thermographiekamera relativ zum Koordinatensystem des Laserscanners. Dabei werden am Messobjekt oder im zu vermessenden Bereich Zieltafeln angeordnet, die sowohl im Thermographiebild als auch im 3D-Scan sichtbar sind, so dass ein Versatz zwischen den optischen Achsen des Scanners und der Thermographiekamera berechenbar ist und daraus erforderliche Transformationen bei der Bildauswertung bestimmt werden können. Durch Algorithmen werden hierzu in den beiden Datensätzen des 3D-Scans und der Thermographiekamera Mittelpunkte und aus deren Versatz die erforderlichen Transformationen ermittelt.

In einer bevorzugten Weiterbildung weist der Laserscanner eine Steuerung oder Steuereinheit auf, über die zumindest die Kalibrierung der Einrichtung zur Erfassung von Thermographiedaten, insbesondere die der Thermographiekamera, automatisiert erfolgt. Die Steuerung oder Steuereinheit ist vorzugsweise diejenige, über die die Einrichtung zur Erfassung von Thermographiedaten, insbesondere die Thermographiekamera, und die Plattform gemeinsam ansteuerbar und ggf. mit Energie versorgt sind.

In einer bevorzugten Weiterbildung weist das Verfahren einen Schritt Entzerren der Thermographiedaten des Messobjektes und einen Schritt Verrechnen oder Verschmelzen der Thermographiedaten zu einer Panoramaaufnahme auf.

Strukturelle, stoffliche oder andere Inhomogenitäten des Messobjektes sind über den Laserscanner besonders gut detektierbar, wenn das Verfahren in einer bevorzugten Weiterbildung vor dem Schritt Aufnahme von Thermographiedaten einen Schritt zumindest abschnittsweises, insbesondere instationäres, Erwärmen oder Abkühlen des Messobjektes aufweist.

In einer bevorzugten Weiterbildung des Verfahrens erfolgt der Schritt Aufnahme von Thermographiedaten von mehreren Aufnahmestandorten aus, woraus eine ausreichend lückenarme Punktewolke, bestehend aus vielen Scans, mit zugeordneten Thermographiedaten resultiert.

In einer bevorzugten Weiterbildung weist das Verfahren einen Schritt Ermitteln einer Schadstelle und / oder Feuchtstelle an oder in einer Struktur des Messobjektes, insbesondere eines schützenswerten Gebäudes (Cultural Heritage), in Abhängigkeit des 3D-Scans und der zugeordneten Thermographiedaten auf. Auch bei diesem Schritt kann der Umstand genutzt werden, dass Schadstellen und / oder Feuchtstellen ein anderes Wärmestrahlungsverhalten aufweisen können als ihre Umgebung.

Weitere mögliche Anwendungen des Laserscanners oder weitere Schritte des Verfahrens sind beispielsweise: Erfassen von Verformungen von Bauwerken, wie beispielsweise einer Brücke; Überwachung von Elektroinstallationen zur Ortung von zu hohen Strömen oder Kurzschlüssen oder Ermitteln von Kältebrücken an Gebäuden, insbesondere zur Analyse und Verbesserung der Energieeffizienz.

Vorteilhaft ist, dass der Laserscanner zerstörungsfrei arbeitet, wodurch der Messvorgang das Messergebnis nicht oder lediglich vernachlässigbar beeinflusst.

Während dem Schritt Aufnahme von Thermographiedaten, während dem der Laserscanner um seine Drehachse und die Thermographiekamera um ihre Achse verschwenkt werden, werden vorzugsweise eine Vielzahl, vorzugsweise etwa 20 bis 40, besonders bevorzugt 32 Einzelbilder aufgenommen, welche eine Wärmestrahlung des oder der aufgenommenen Messobjekte für die Pixel des 3D-Scans enthalten.

Sobald mittels der oben genannten Kalibrierungen die notwendigen, insbesondere optischen und geometrischen, Parameter der Thermographiekamera ermittelt sind, können die erfassten, thermographischen Einzelbilder in einem bevorzugten Schritt des Verfahrens entzerrt und zu einer Panoramaaufnahme verrechnet/verschmolzen werden.

Über einen Schritt Ermitteln der Temperatur kann in einer bevorzugten Weiterbildung über einen materialabhängigen Emissionsgrad aus der Wärmestrahlung die Temperatur in jedem Pixel ermittelt werden.

Der Schritt Zuordnen der Thermographiedaten zu den 3D-Daten des Messobjektes erfolgt vorzugsweise, indem die Thermographiedaten teil-transparent mit den 3D-Daten verknüpft werden, wodurch Kanten und Details des oder der Messobjekte besser erkennbar sind.

Die Erfindung wird im Folgenden anhand eines Ausführungsbeispiels näher erläutert. Es zeigen:
Figur 1 eine Einzeldarstellung eines erfindungsgemäßen Laserscanners;
Figur 2 eine Ansicht von oben auf den Laserscanner, der zur Messung der Thermographiedaten um seine Drehachse verschwenkbar ist;
Figur 3 eine Seitenansicht des Laserscanners in der die erfindungsgemäße Verschwenkbarkeit der Thermographiekamera um ihre Achse dargestellt ist;
Figur 4 eine fertige Wärmebild-Panoramaaufnahme;
Figur 5 eine 3D-Ansicht einer Punktewolke mit zugeordneten Thermographiedaten und einer zugeordneten, fertigen Wärmebild-Panoramaaufnahme;
Figur 6 eine fertige Wärmebild-Panoramaaufnahme einer Häuserfront zur Analyse der Wärmedämmung;

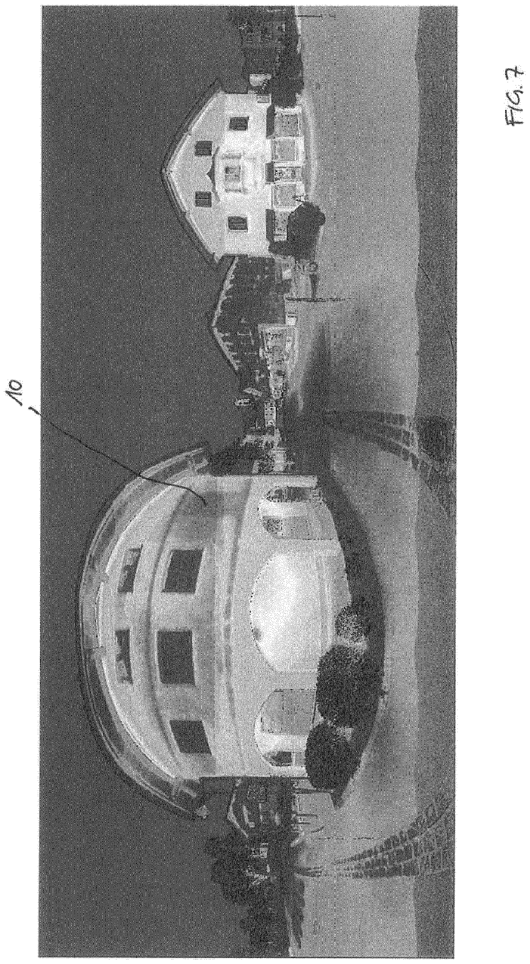

Figur7 die Wärmebild-Panoramaaufnahme gemäß Figur 6 mit freigestelltem Himmel;
Figur 8 eine 3D-Ansicht einer Punktewolke mit zugeordneten Thermographiedaten einer Siedlung zur Analyse der Wärmedämmung; und
Figur 9 eine andere 3D-Ansicht der Punktewolke mit zugeordneten Thermographiedaten gemäß Figur8.

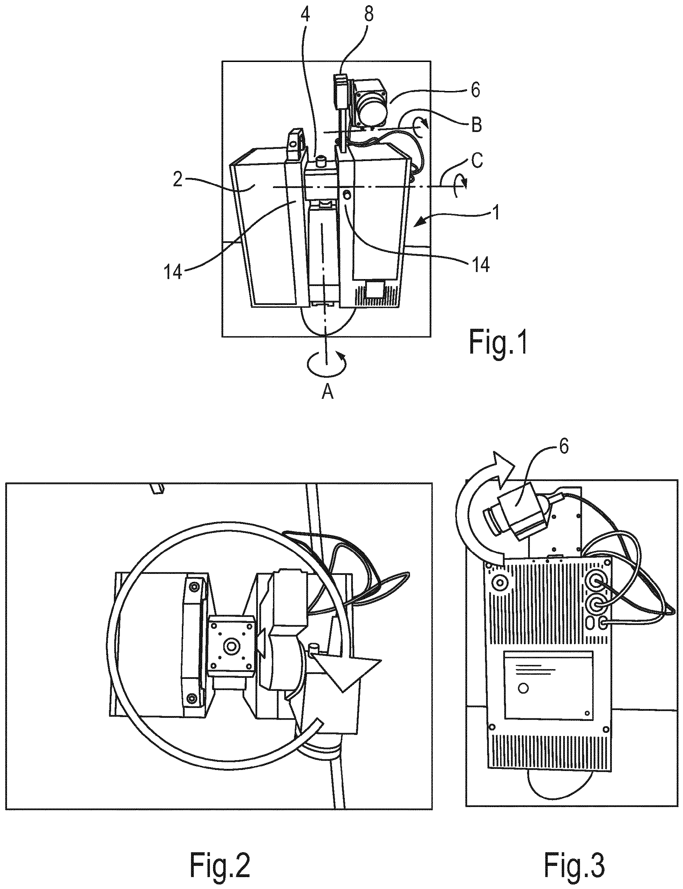

Figur 1 zeigt eine Vorderansicht eines erfindungsgemäßen Laserscanners 1 mit dem eingangs erläuterten Aufbau. Dem gemäß ist an einem ein Gehäuse 2 des Laserscanners 1 tragenden Träger 14 ein Drehkopf 4 mit der Messoptik gelagert. Der Drehkopf 4 ist um eine Horizontalachse C (Ansicht nach Figur 1) drehbar. Der Träger mit dem Gehäuse 2 und dem Drehkopf 4 ist um eine vertikale Drehachse A verschwenkbar.

Am Träger 14 ist auch die Einrichtung zur Erfassung von Thermographiedaten gelagert. Im konkreten Fall ist dies eine Infrarotkamera 6 (Thermographiekamera), die um eine Achse B verschwenkbar an einer Plattform 8 gelagert ist, die ihrerseits am Träger 14 befestigt ist.

Zur Vermessung kann der Träger 14 mit dem Gehäuse 2, dem Drehkopf 4 und der Infrarotkamera 6 um die Drehachse A schrittweise verschwenkt werden. Diese schrittweise Verschwenkung ist in Figur 2 dargestellt. Das heißt, während eines Messvorgangs zur Erfassung der Thermographiedaten wird der Laserscanner 1, genauer gesagt der Träger 14 mit dem Gehäuse 2 und dem Drehkopf 4, um die in Figur 2 senkrecht zur Zeichenebene verlaufende Drehachse A (siehe Pfeilrichtung) verschwenkt. Die Verschwenkung kann dabei in beiden Richtungen erfolgen.

Um ein sphärisches Wärmebild zu erhalten, wird die Blickrichtung der Infrarotkamera 6 gemäß Figur 3 um die dort senkrecht zur Zeichenebene (Figur 3) verlaufende Achse B verstellt - diese schrittweise Verstellung/Verschwenkung ist in Figur 3 mit einem Pfeil dargestellt. Auch diese Verstellung kann in beiden Richtungen erfolgen. Die Achse B verläuft dabei quer zur Achse A, wobei beide Achsen zueinander versetzt angeordnet sind. Die Ansteuerung der schrittweisen Verschwenkung der Infrarotkamera 6 und des eigentlichen Laserscanners 1 (Träger 14, Gehäuse 2, Drehkopf 4 mit Messoptik) erfolgt vorzugsweise über die Steuerung des Laserscanners 1.

Über die motorisierte Thermographiekamera /Infrarotkamera 6 wird somit automatisch ein sphärisches 360°-Rundumbild erzeugt, das mit den 3D-Scandaten ergänzt, beziehungsweise diesen zugeordnet wird, um ein Wärmebild, insbesondere eine Wärmebild-Panoramaaufnahme, zu erhalten. Damit kann jedem Messpunkt eines 3D-Scans eine Temperatur oder eine Information zugeordnet werden, aus der die Temperatur ableitbar ist. Selbstverständlich können auch kleinere Sphärenabschnitte gescannt und thermographisch erfasst werden. Insbesondere ergibt sich aus der vom Laserscanner 1 benötigten Standfläche und seinen geometrischen Abmessungen bereits ein kleiner, bodennaher Sphärenabschnitt, der nicht scannbar / thermographisch erfassbar ist. Um dies zu vermeiden sind andere Lagerungskonzepte des Drehkopfes und / oder der Thermographiekamera denkbar.

Um das Rundumbild erzeugen zu können, müssen zahlreiche Einzelbilder in verschiedene Himmelsrichtungen aufgenommen werden. Dazu ist die erläuterte Plattform 8 vorgesehen, die eine handelsübliche Infrarotkamera 6 aufnimmt und diese in vertikaler Richtung (Figur 3) bewegen kann. Diese Plattform 8 mit der Infrarotkamera 6 ist auf dem eigentlichen Laserscanner 1 (Träger 14) befestigt. Durch die zusätzliche horizontale Drehbewegung des Laserscanners 1 (Figur 2) kann dann jede beliebige Blickrichtung automatisch angefahren werden.

Während des Aufnahmeprozesses dreht sich der 3D-Scanner, beziehungsweise Laserscanner 1 schrittweise um die Drehachse A (Figur 2). An jeder Position nimmt die Infrarotkamera 6 ein Einzelbild auf. Nach einer vollständigen Drehung um 360° wird die Infrarotkamera 6 über die Plattform 8 um die Achse B vertikal um einen Schritt nach oben (Figur 3) gedreht. In der Folge dreht sich der 3D-Scanner 1 wieder um seine Drehachse A und die Infrarotkamera 6 nimmt bei jeder Zwischenposition jeweils ein Einzelbild auf.

Dieser Prozess wird solange wiederholt, bis auch der Zenith über dem Scanner, beziehungsweise Laserscanner 1 mit Thermographiebildern abgedeckt ist.

Selbstverständlich kann alternativ auch zunächst die Blickrichtung über die Plattform 8 in einer ersten Winkelposition des Gehäuses 2 verändert werden, so dass zunächst eine Vertikalvermessung erfolgt. In der Folge kann dann der Laserscanner 1 um einen Schritt um die Achse A verschwenkt werden und dann die Vertikalvermessung wiederholt werden. Dieser Prozess wird dann entsprechend wiederum so lange wiederholt, bis der gesamte Raum vermessen ist, beziehungsweise seine Thermographiedaten erfasst sind.

Sowohl die Plattform 8 als auch die Infrarotkamera 6 sind über Kabel oder dergleichen mit der Steuerung des Laserscanners 1 verbunden. Somit wird sowohl die Energieversorgung als auch die Kommunikation über die zentrale Steuerung des Laserscanners 1 gewährleistet. Der gesamte Aufnahmeprozess, inklusive der dazu notwendigen Ansteuerung der Infrarotkamera 6 und der motorisierten Plattform 8 wird autonom vom Laserscanner 1 durchgeführt.

Da eine Konfiguration von Objektiv und Kamera individuelle optische geometrische Eigenschaften (Brennweite, radiale Verzeichnung, etc.) aufweist, wird jedes Kamera-Linsensysten individuell im Werk eingestellt und kalibriert. Dies erfolgt über erfindungsgemäße Kalibriermethoden, die an die Ansprüche der Thermographiekamera 6 angepasst sein müssen, insbesondere sind.

In einem Schritt erfolgt die Einstellung des Objektivs der Infrarotkamera 6, beziehungsweise Thermographiekamera 6, auf die hyperfokale Distanz, um einen möglichst großen Entfernungsbereich mit der Thermographiekamera 6abdecken zu können. Hierzu wird vorzugsweise ein thermographisch gut sichtbares Testobjekt, beispielsweise ein spezieller "Siemensstern" verwendet, der für die Thermographiekamera 6 sichtbar ist, so dass diese optimal fokussiert werden kann.

Zur Kalibrierung der inneren Kalibrierparameter der Thermographiekamera 6, beispielsweise der radialen Verzeichnung, des Bildhauptpunktes etc. wird ein spezielles Kalibrierobjekt, vorzugsweise ein Schachbrett-Muster verwendet, das ebenfalls thermographisch sichtbar ist. Durch Auswertung dieses Musters lassen sich die genannten inneren Parameter mittels Standardalgorithmen bestimmen.

Zur externen Kalibrierung (Verschiebung/Verdrehung der Thermographiekamera 6 relativ zum Koordinatensystem des Laserscanner 1), werden erfindungsgemäß spezielle Zieltafeln verwendet, deren Mittelpunkte sowohl im Thermobild als auch in den 3D-Bilddaten sichtbar sein müssen. Durch spezielle Algorithmen werden dann in beiden Datensätzen (Thermographiedaten, 3D-Scandaten) die Mittelpunkte bestimmt und aus deren Versätzen die erforderlichen Transformationen (externe Kalibrierung) bestimmt.

Im gezeigten Ausführungsbeispiel erfolgen die genannten Kalibrierungen automatisch über die genannte Steuerung oder Steuereinheit (nicht dargestellt) des Laserscanners 1.

Sobald mittels einer derartigen Kalibrierung alle optischen und geometrischen Parameter der Thermographiekamera 6 ermittelt sind, können die erfassten Einzelbilder entzerrt und zu einer Panoramaaufnahme verrechnet/verschmolzen werden. Während des gesamten Aufnahmeprozesses (Verschwenkung um die Drehachse A und Verschwenkung um die Achse B) werden beispielsweise zirka 32 Bilder gesammelt, welche die Wärmestrahlung der aufgenommenen Objekte in jedem Pixel des 3D-Scans enthalten. Über einen materialabhängigen Emissionsgrad kann dann die Temperatur in jedem Pixel bestimmt werden.

Diese Wärme- oder Thermographiedaten können dann mit den 3D-Daten verknüpft werden, was vorzugsweise teil-transparent erfolgt, um so Kanten und Details besser erkennbar zu machen.

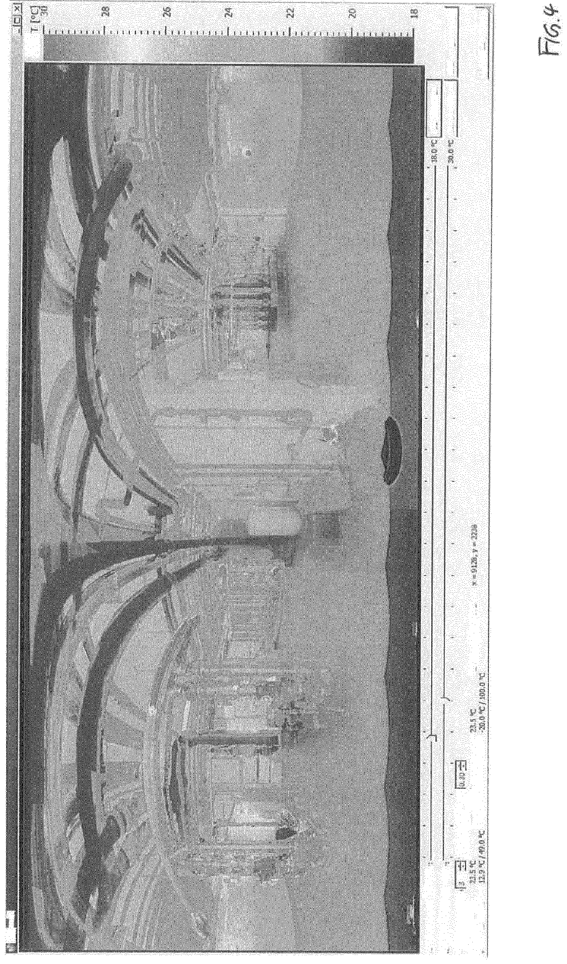

Die Figur 4 zeigt ein Beispiel einer derartigen, fertigen Wärmebild-Panoramaaufnahme in einer Benutzerschnittstelle der Einrichtung zur Zuordnung der Thermographiedaten zu Pixels des 3D-Scans. Dargestellt ist ein Maschinenraum mit Pumpen, Behältern, Rohren und Schaltschränken. Rechts in Figur 4 ist eine Temperatur-/Farbskala abgebildet, über die die Temperatur einzelner Bereiche der Wärmebild-Panoramaaufnahme für einen Anwender im Wesentlichen abschätzbar ist. Die Schnittstelle bietet dem Anwender Unterstützung bei der Analyse von Wärmebild-Panoramaaufnahmen und 3D-Ansichten von Punktewolken mit zugeordneten Thermographiedaten. So wird über die Schnittstelle unter anderem die niedrigste und die höchste Temperatur in der Wärmebild-Panoramaaufnahme oder im 3D-Scan ausgegeben, die Temperatur unterhalb des vom Anwender geführten Cursors angezeigt, der Transparenzgrad der Thermographiedaten gewählt, die Darstellung auf ein gewünschtes Temperaturintervall beschränkt oder zwischen der Wärmebild-Panoramaaufnahme und der 3D-Ansicht der gescannten Punktewolke mit zugeordneten Thermographiedaten gewechselt.

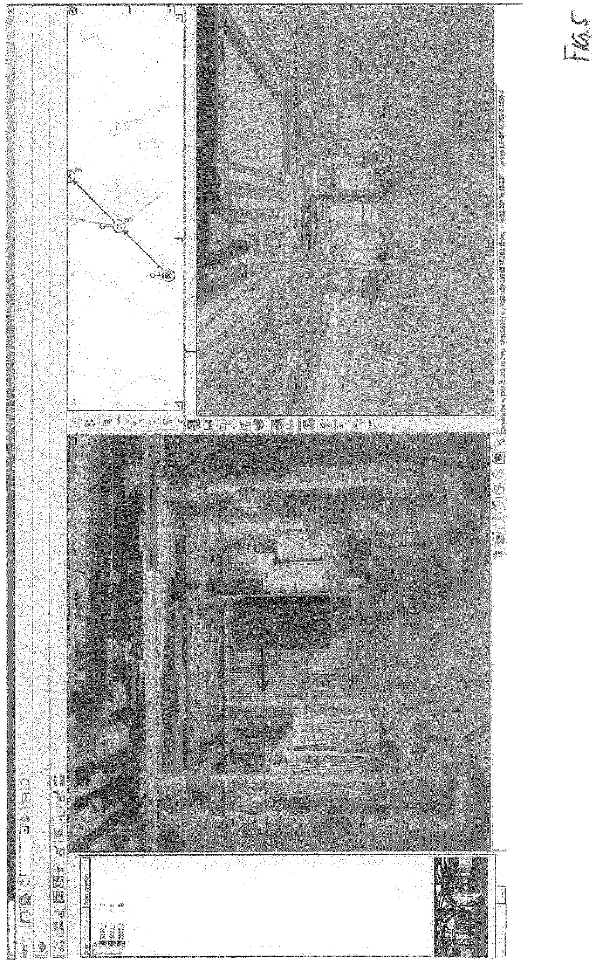

In Figur 5 rechts ist ein Abschnitt der fertigen Wärmebild-Panoramaaufnahme gemäß Figur 4 gezeigt. In Figur 5 links ist eine von mehreren möglichen, vom Anwender wählbaren 3D-Ansichten der gescannten Punktewolke mit zugeordneten Thermographiedaten gezeigt. Die Thermographiedaten stammen dabei aus der fertigen Wärmebild-Panoramaaufnahme. In der 3D-Ansicht ist der Laserscanner 1 als Quader zu erkennen. In Figur 5 rechts oben ist eine Übersicht von Standorten 12 des Laserscanners 1 während des Scanvorgangs dargestellt.

In der 3D-Ansicht gemäß Figur 5 fallen Raumbereiche auf, in denen keine Pixel zu erkennen sind und die zudem farblich unstrukturiert sind. Hier handelt es sich um Raumbereiche, die vom Drehkopf 4 und / oder der Thermographiekamera 6 nicht abgetastet werden konnten, da sie beim Scan- beziehungsweise Erfassungsvorgang durch andere Objekte abgeschattet waren. Indem der Laserscanner 1 von verschiedenen Standorten aus scannt / erfasst und die dann mehreren Wärmebild-Panoramaaufnahmen den mehreren Punktewolken zuordnet, können auch diese Raumbereiche in die 3D-Punktewolke mit zugeordneten Thermographiedaten integriert werden.

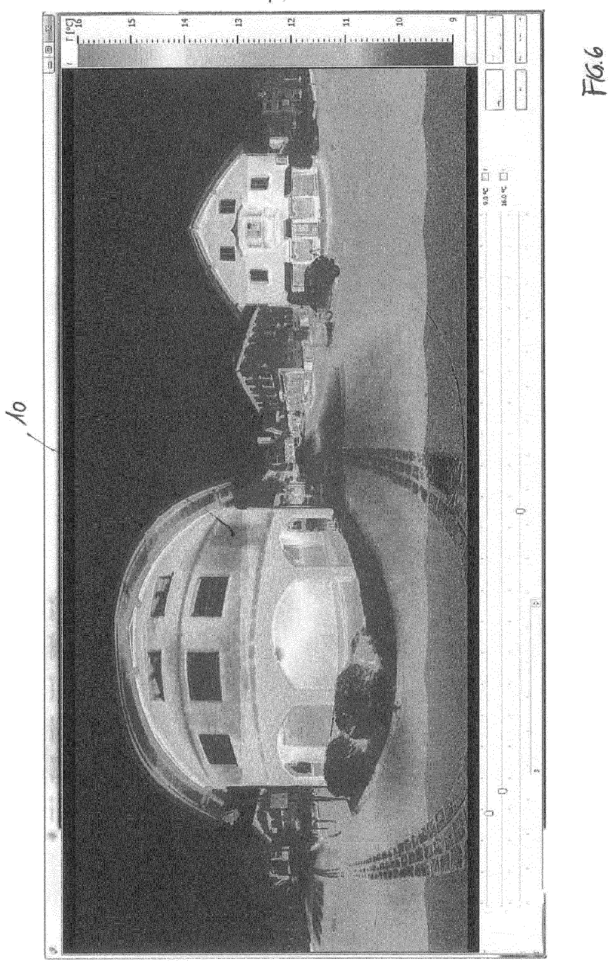

Figur 6 zeigt ein Beispiel einer fertigen Wärmebild-Panoramaaufnahme einer Häuserfront (links in Figur 6) zur Analyse ihrer Wärmedämmung. Auch hier weisen rötlich gefärbte Bereiche wieder eine vergleichsweise hohe Temperatur und schlechte Wärmedämmung auf. Auffällig an dieser Aufnahme ist, dass die Fassade des Hauses wahrscheinlich eine strukturelle Inhomogenität 10 aufweist. An dieser Stelle zeigen die hochauflösenden Pixel der 3D-Punktewolke keine Kanten oder andere Konturen. Die thermographischen Daten deuten jedoch an, dass hier das Abstrahlverhalten der Fassade verändert ist. Aus der Form der Inhomogenität 10 ist anzunehmen, dass hier eine Öffnung der Fassade, beispielsweise eine Tür zugemauert und für das menschliche Auge unsichtbar verputzt wurde. Auch hier fällt wieder ein Bereich mit absolut homogenem Farbverlauf aus, wobei es sich um den Himmel handelt. Zur besseren Verständlichkeit der Panoramaaufnahme ist der Himmel in Figur 6 freigestellt und dunkelrot eingefärbt.

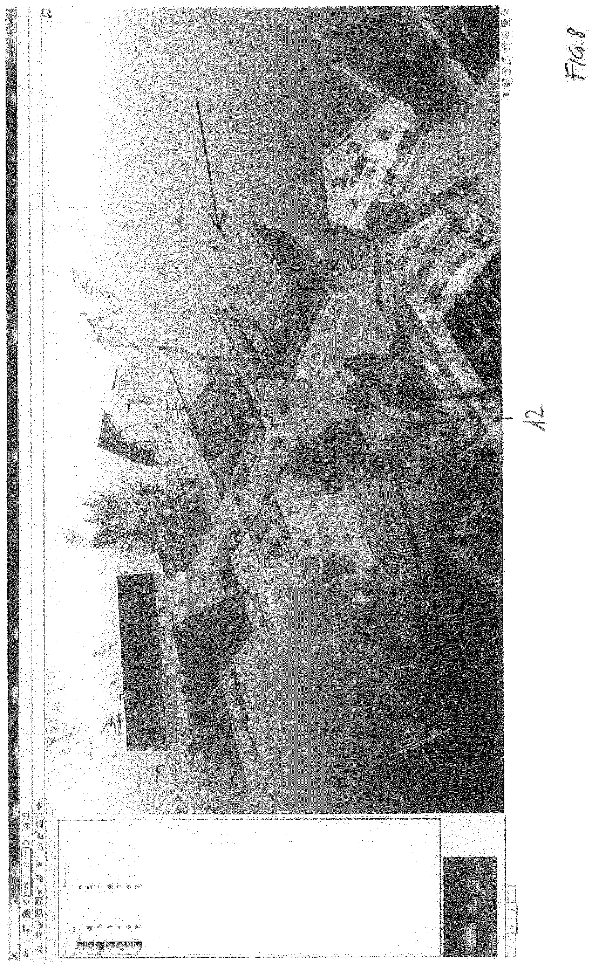

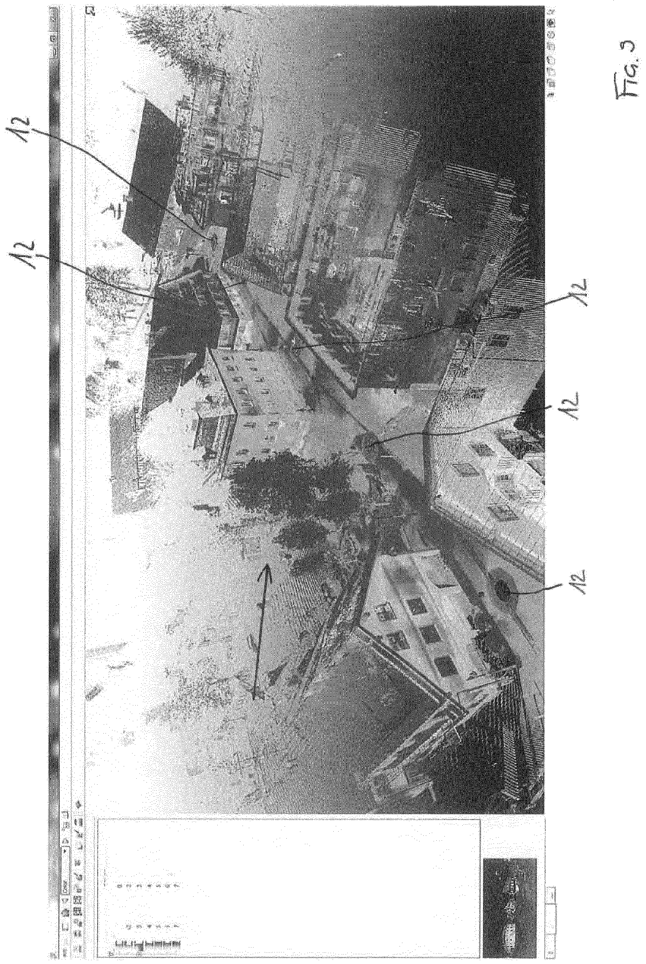

Die Figuren 8 und 9 zeigen verschiedene 3D-Ansichten mehrerer miteinander verrechneter Punktewolken mit zugeordneten Thermographiedaten zur Analyse der Wärmedämmung einer Siedlung. Zum besseren Verständnis ist in Figur 8 die Blickrichtung der Figur 9 auf die Siedlung und umgekehrt in Figur 9 die Blickrichtung der Figur 8 auf die Siedlung als Pfeil angedeutet. Auffällig sind dabei Bereiche, die sich für den Betrachter transparent darstellen. Beispielhaft seien manche Dächer der Häuser genannt. Auch hier handelt es sich wieder um beim Scan- / Erfassungsvorgang abgeschattete Bereiche, die folglich weder Pixel noch Thermographiedaten aufweisen können. Um diese Abschattungsbereiche zumindest bezüglich der Fassaden klein zu halten, wurde der Laserscanner 1 für den Scan- / Erfassungsvorgang an verschiedenen Standorten 12 aufgestellt. In Figur 8 ist dabei aufgrund der gewählten Ansicht nur einer der Standorte 12 zu erkennen. Dabei fällt an jedem Standort 12 der vom Laserscanner 1 nicht scannbare / erfassbare Bereich als kreisförmige blaue Fläche mit grauem Rand auf.

Die genannten transparenten Bereiche erlauben scheinbar den Blick ins Innere der Häuser. Zu sehen sind jedoch lediglich die mit den Thermographiedaten verknüpften Pixel der Fassaden. Allerdings wäre es natürlich möglich, zusätzliche Standorte des Laserscanners 1 innerhalb der Häuser vorzusehen und so eine

Änderung der Abstrahlung von den Innenwänden hin zur Fassade sichtbar und so Rückschlüsse auf Wärmeströme möglich zu machen.

Offenbart ist ein Laserscanner, der mit einer Thermographiekamera ausgeführt ist.

Offenbart ist des Weiteren ein Verfahren zur Erfassung von Thermographiedaten mittels eines derartigen Laserscanners.

### Bezugszeichenliste:

- 1: Laserscanner
- 2: Gehäuse
- 4: Drehkopf
- 6: Infrarotkamera, Thermographiekamera
- 8: Plattform
- 10: strukturelle Inhomogenität
- 12: Standort
- 14: Träger

- A: vertikale Drehachse
- B: Achse
- C: Horizontalachse

## Patentansprüche

1. Laserscanner mit einem Drehkopf (4), der drehbar an einem Gehäuse (2) gehalten ist, das seinerseits um eine Drehachse (A) drehbar ist, wobei im Drehkopf (4) eine Messoptik angeordnet ist, um einen von einem Sender abgegebenen Messstrahl auf ein Messobjekt oder einen von diesem reflektierten Strahl auf einen Empfänger zu lenken, und mit einer Einrichtung zur mittelbaren oder unmittelbaren berührungslosen Erfassung von Thermographiedaten des zu vermessenden Messobjektes und einer Einrichtung zur Zuordnung dieser Thermographiedaten zu Pixeln eines 3D-Scans, wobei die Blickrichtung der Einrichtung zur mittelbaren oder unmittelbaren berührungslosen Erfassung von Thermographiedaten in einer Richtung vertikal zu einer Standfläche schrittweise verstellbar ist, **dadurch gekennzeichnet, dass** eine innere und eine externe Kalibrierung erfolgt, und dass am Messobjekt oder in einem zu vermessenden Bereich Zieltafeln angeordnet sind, die sowohl in einem Thermographiebild als auch im 3D-Scan sichtbar sind, sodass ein Versatz zwischen optischen Achsen des Drehkopfes (4) und der Einrichtung zur mittelbaren oder unmittelbaren berührungslosen Erfassung von Thermographiedaten berechenbar ist und erforderliche Transformationen bei einer Bildauswertung bestimmbar sind.

2. Laserscanner nach Patentanspruch 1, wobei die Einrichtung, insbesondere diejenige zur Erfassung der Thermographiedaten, eine Thermographiekamera, vorzugsweise eine Infrarotkamera ist, die vorzugsweise am Gehäuse des Laserscanners gelagert ist.

3. Laserscanner nach Patentanspruch 1, wobei die Einrichtung, insbesondere diejenige zur Erfassung der Thermographiedaten, eine Thermographiekamera (6), vorzugsweise eine Infrarotkamera ist, die vorzugsweise an einem Träger (14) des Laserscanners (1) gelagert ist.

4. Laserscanner nach einem der vorhergehenden Patentansprüche mit einer Plattform (8), über die die Einrichtung, insbesondere diejenige zur Erfassung der Thermographiedaten, insbesondere die Thermographiekamera (6), um eine quer zur Drehachse (A) verlaufende Achse (B) verschwenkbar ist.

5. Laserscanner nach Patentanspruch 4, wobei ein Schwenkwinkel, insbesondere derjenige der Einrichtung zur Erfassung der Thermographiedaten, insbesondere der Thermographiekamera (6), schrittweise verstellbar ist.

6. Laserscanner nach Patentanspruch 4 oder 5, wobei die Einrichtung zur Erfassung von Thermographiedaten, insbesondere die Thermographiekamera (6), und die Plattform (8) über eine Steuerung des Laserscanners (1) ansteuerbar sind.

7. Laserscanner nach einem der vorhergehenden Patentansprüche mit einer Steuerung oder Steuereinheit, über die zumindest die innere und / oder die äußere Kalibrierung der Einrichtung zur Erfassung von Thermographiedaten, insbesondere die der Thermographiekamera (6), automatisiert erfolgt.

8. Verfahren zur Erfassung von Thermographiedaten eines zu scannenden Messobjektes mittels eines Laserscanners (1) nach einem der vorhergehenden Patentansprüche, mit den Schritten:
- Scannen des Messobjektes zur Erzeugung von 3D-Daten des Messobjektes, 3D-Scan;
- Aufnahme von Thermographiedaten des Messobjektes mittels der Einrichtung zur Erfassung von Thermographiedaten, insbesondere der Thermographiekamera (6), durch schrittweises Verschwenken des Laserscanners (1) um die Drehachse (A) und schrittweises Verstellen der Blickrichtung der Einrichtung zur Erfassung von Thermographiedaten, insbesondere der Thermographiekamera (6), um ein etwa sphärisches Rundum-Thermographiebild des Messobjektes zu erhalten, und
- Zuordnen der Thermographiedaten zu den 3D-Daten des Messobjektes, **dadurch gekennzeichnet, dass**
- die Einrichtung zur Erfassung von Thermographiedaten, insbesondere die Thermographiekamera (6), kalibriert wird, wobei eine innere und eine externe Kalibrierung erfolgt, und dass
- die externe Kalibrierung, das heißt, die Erfassung der Lage der Einrichtung zur Erfassung von Thermographiedaten, insbesondere der Lage der Thermographiekamera (6) zum 3D-Scannerzentrum, mittels Zieltafeln erfolgt, die sowohl im Thermobild als auch im 3D-Scan sichtbar sind, so dass ein Versatz zwischen optischen Achsen des 3D-Scanners und der Einrichtung zur Erfassung von Thermographiedaten, insbesondere der Thermographiekamera (6) berechenbar und daraus erforderliche Transformationen bei der Bildauswertung bestimmbar sind.

9. Verfahren nach Patentanspruch 8, wobei ein Objektiv der Thermographiekamera (6) auf eine hyperfokale Distanz eingestellt wird.

10. Verfahren nach Patentanspruch 8 oder 9, wobei die innere Kalibrierung, beispielsweise die Erfassung der radialen Verzeichnung oder des Bildhauptpunktes, mittels eines definierten Kalibrierobjektes erfolgt, das thermographisch sichtbar ist, wobei das Kalibrierobjekt beispielsweise ein schachbrettartiges Muster oder dergleichen ist.

11. Verfahren nach einem der Patentansprüche 8 bis 10, wobei zumindest eine der Kalibrierungen automatisiert erfolgt.

12. Verfahren nach einem der Patentansprüche 8 bis 11 mit Schritten
- Entzerren der Thermographiedaten des Messobjektes, und
- Verrechnen oder Verschmelzen der Thermographiedaten zu einer Panoramaaufnahme

13. Verfahren nach einem der Patentansprüche 8 bis 12, wobei vor dem Schritt
- Aufnahme von Thermographiedaten, ein Schritt
- zumindest abschnittsweises Erwärmen oder Abkühlen des Messobjektes, erfolgt.

14. Verfahren nach einem der Patentansprüche 8 bis 13 mit einem Schritt
- Ermitteln einer Schadstelle und / oder Feuchtstelle an oder in einer Struktur des Messobjektes in Abhängigkeit des 3D-Scans und der zugeordneten Thermographiedaten.

## Claims

1. A laser scanner comprising a rotary head (4) which is held rotatably on a housing (2) which in turn is rotatable about an axis of rotation (A), wherein measuring optics are arranged in the rotary head (4) in order to direct a measuring beam emitted by a transmitter to a measuring object, or a beam reflected by the latter to a receiver, and including means for indirect or direct contactless capturing of thermographic data of the measuring object to be measured, and means for assigning said thermographic data to pixels of a 3D scan, wherein the viewing direction of the device for indirect or direct contactless capturing of thermographic data is stepwise adjustable in a direction vertical to a floor space, **characterized in that** an internal and an external calibration is performed, and that target boards are arranged on the measuring object or in an area to be measured, which are visible both in a thermographic picture and in the 3D scan so that an offset between the optical axes of the rotary head (4) and the means for indirect or direct contactless capturing of thermographic data can be calculated and the required transformations during picture evaluation can be determined.

2. The laser scanner according to claim 1, wherein the means, especially the one for capturing the thermographic data, is a thermographic camera, preferably an infrared camera, which is preferably supported on the housing of the laser scanner.

3. The laser scanner according to claim 1, wherein the means, especially the one for capturing the thermographic data, is a thermographic camera (6), preferably an infrared camera, which is preferably supported on a carrier (14) of the laser scanner (1).

4. The laser scanner according to any of the preceding claims comprising a platform (8) via which the means, especially the one for capturing the thermographic data, especially the thermographic camera (6), is adapted to be pivoted about an axis (B) extending transversely to the axis of rotation (A).

5. The laser scanner according to claim 4, wherein a pivoting angle, especially the one of the means for capturing the thermographic data, especially of the thermographic camera (6), is stepwise adjustable.

6. The laser scanner according to claim 4 or 5, wherein the means for capturing thermographic data, especially the thermographic camera (6), and the platform (8) are controllable via a controller of the laser scanner (1).

7. The laser scanner according to any of the preceding claims comprising a controller or control unit via which at least the internal and/or external calibration of the means for capturing thermographic data, especially those of the thermographic camera (6), is/are performed in an automated manner.

8. A method for capturing thermographic data of a measuring object to be scanned using a laser scanner (1) according to any of the preceding claims, comprising the steps of:
- scanning the measuring object for generating 3D data of the measuring object (3D scan);
- recording thermographic data of the measuring object using the means of capturing thermographic data, especially the thermographic camera (6), by stepwise pivoting of the laser scanner (1) about the axis of rotation (A) and stepwise adjusting the viewing direction of the means for capturing thermographic data, especially of the thermographic camera (6), so as to obtain an approximately spherical 360° thermographic picture of the measuring object, and
- assigning the thermographic data to the 3D data of the measuring object **characterized in that**
- the means for capturing thermographic data, especially the thermographic camera (6), is calibrated, wherein an internal calibration and an external calibration are performed, and that
- the external calibration, i.e. the detection of the position of the means for capturing thermographic data, especially of the position of the thermographic camera (6), relative to the 3D scanner center is performed by means of target boards which are visible both in the thermal picture and in the 3D scan, so that an offset between optical axes of the 3D scanner and the means for capturing thermographic data, especially the thermographic camera (6), can be calculated and based thereon required transformations in picture evaluation can be determined.

9. The method according to claim 8, wherein a lens of the thermographic camera (6) is adjusted to a hyper-focal distance.

10. The method according to claim 8 or 9, wherein the internal calibration, for example the capturing of the radial distortion or of the principal point of the picture, is performed by means of a defined calibrating object that is thermographically visible, the calibrating object being a checkerboard pattern or the like, for example.

11. The method according to claim 8 to 10, wherein at least one of the calibrations is carried out in an automated manner.

12. The method according to any of claims 8 to 11, comprising the steps of
- correcting distortions of the thermographic data of the measuring object, and
- combining or merging the thermographic data into a panoramic picture.

13. The method according to any of claims 8 to 12, wherein, before the step of
- recording thermographic data, a step of
- heating or cooling the measuring object, at least in portions, is taken.

14. The method according to any of claims 8 to 13 comprising a step of
- determining a damaged spot and/or humid spot at or in a structure of the measuring object in dependence on the 3D scan and the assigned thermographic data.

## Revendications

1. Scanner laser avec une tête rotative (4) qui est maintenue de manière rotative sur un boîtier (2) qui peut lui-même tourner autour d'un axe de rotation (A), dans lequel une optique de mesure est disposée dans la tête rotative (4) pour diriger un rayon de mesure émis par un émetteur sur un objet de mesure ou un rayon réfléchi par celui-ci sur un récepteur, et avec un appareil pour la saisie directe ou indirecte sans contact de données thermographiques de l'objet de mesure à mesurer et un appareil pour l'attribution de ces données thermographiques à des pixels d'un scan 3D, dans lequel la direction de visualisation de l'appareil pour la saisie directe ou indirecte sans contact de données thermographiques est réglable progressivement dans une direction verticale par rapport à une surface de support, **caractérisé en ce qu'**un calibrage interne et externe est effectué, et **en ce que** des plaques cibles sont disposées sur l'objet de mesure ou dans une zone à mesurer, plaques qui sont visibles aussi bien dans une image thermographique que dans un scan 3D, de sorte qu'un décalage entre des axes optiques de la tête rotative (4) et l'appareil de saisie directe ou immédiate sans contact de données thermographiques puisse être calculé et que des transformations nécessaires puissent être déterminées lors d'une évaluation d'image.

2. Scanner laser selon la revendication 1, dans lequel l'appareil, en particulier celui pour la saisie des données thermographiques, est une caméra thermographique, de préférence une caméra infrarouge, qui est de préférence montée sur le boîtier du scanner laser.

3. Scanner laser selon la revendication 1, dans lequel l'appareil, en particulier celui pour la saisie des données thermographiques, est une caméra thermographique (6), de préférence une caméra infrarouge, qui est de préférence montée sur un support (14) du scanner laser (1).

4. Scanner laser selon l'une quelconque des revendications précédentes, avec une plateforme (8) par l'intermédiaire de laquelle l'appareil, en particulier celui pour la saisie des données thermographiques, en particulier la caméra thermographique (6), peut pivoter autour d'un axe (B) s'étendant transversalement à l'axe de rotation (A).

5. Scanner laser selon la revendication 4, dans lequel un angle de pivotement, en particulier celui du dispositif pour la saisie des données thermographiques, en particulier de la caméra thermographique (6), peut être réglé progressivement.

6. Scanner laser selon la revendication 4 ou 5, dans lequel l'appareil pour la saisie de données thermographiques, en particulier la caméra thermographique (6), et la plateforme (8) peuvent être commandés par l'intermédiaire d'un dispostif de commande du scanner laser (1).

7. Scanner laser selon l'une quelconque des revendications précédentes avec un dispositif de commande ou une unité de commande par l'intermédiaire duquel/de laquelle au moins le calibrage intérieur et/ou extérieur de l'appareil pour la saisie de données thermographiques, en particulier celui de la caméra thermographique (6), est effectué de manière automatisée.

8. Procédé pour la saisie de données thermographiques d'un objet de mesure à scanner au moyen d'un scanner laser (1) selon l'une quelconque des revendications précédentes, avec les étapes consistant à :
- scanner l'objet de mesure pour générer des données 3D de l'objet de mesure, scan 3D ;
- enregistrer des données thermographiques de l'objet de mesure au moyen de l'appareil pour la saisie de données thermographiques, en particulier de la caméra thermographique (6), par pivotement progressif du scanner laser (1) autour de l'axe de rotation (A) et réglage progressif de la direction de visualisation de l'appareil pour la saisie de données thermographiques, en particulier de la caméra thermographique (6), pour obtenir une image thermographique à peu près sphérique tout autour de l'objet de mesure, et
- associer les données thermographiques aux données 3D de l'objet de mesure, **caractérisé en ce que**
- l'appareil pour la saisie de données thermographiques, en particulier la caméra thermographique (6), est calibré, dans lequel un calibrage interne et externe est effectué, et **en ce que**
- le calibrage externe, c'est-à-dire la saisie de la position de l'appareil pour la saisie de données thermographiques, en particulier de la position de la caméra thermographique (6) par rapport au centre de scanner 3D, s'effectue au moyen de plaques cibles qui sont visibles aussi bien dans l'image thermique que dans le scan 3D, de sorte qu'un décalage entre des axes optiques du scanner 3D et l'appareil pour la saisie de données thermographiques, en particulier la caméra thermographique (6), puisse être calculé et des transformations nécessaires lors de l'évaluation d'image puissent en être déterminées.

9. Procédé selon la revendication 8, dans lequel un objectif de la caméra thermographique (6) est réglé sur une distance hyperfocale.

10. Procédé selon la revendication 8 ou 9, dans lequel le calibrage interne, par exemple la saisie de la distorsion radiale ou du point principal d'image, est effectué au moyen d'un objet de calibrage défini qui est visible par thermographie, dans lequel l'objet de calibrage est par exemple un motif à damier ou similaire.

11. Procédé selon l'une quelconque des revendications 8 à 10, dans lequel au moins un des calibrages est effectué de manière automatisée.

12. Procédé selon l'une quelconque des revendications 8 à 11 avec les étapes consistant à
- déformer les données thermographiques de l'objet de mesure, et
- convertir ou fusionner les données thermographiques en une prise de vue panoramique.

13. Procédé selon l'une quelconque des revendications 8 à 12, dans lequel, avant l'étape
- enregistrer des données thermographiques, une étape consistant à
- chauffer ou refroidir au moins partiellement l'objet de mesure est effectuée.

14. Procédé selon l'une quelconque des revendications 8 à 13, avec une étape consistant à
- déterminer une zone endommagée et/ou une zone humide sur ou dans une structure de l'objet de mesure en fonction du scan 3D et des données thermographiques associées.
